# EUROPÄISCHE PATENTSCHRIFT

(11) **EP 1 401 265 B1**
(45) Veröffentlichungstag und Bekanntmachung des Hinweises auf die Patenterteilung: **17.05.2006**
(21) Anmeldenummer: 02747237.2
(22) Anmeldetag: 27.06.2002
(51) Int. Cl.: A01K 27/00

(54) **WICKELLEINE FÜR TIERE**
RETRACTABLE LEASH FOR PETS
LAISSE A ENROULEUR POUR ANIMAUX

(30) Priorität: 28.06.2001 DE 20110526 U
(43) Veröffentlichungstag der Anmeldung: 31.03.2004
(73) Patentinhaber: GENIFLEX LTD, West Yorkshire WF1 2HB (GB)
(72) Erfinder: Meissner, Eleonore, 66111 Saarbrücken (DE)
(86) Internationale Anmeldenummer: PCT/DE2002/002333
(87) Internationale Veröffentlichungsnummer: WO 2003/001905

(56) Entgegenhaltungen:
- DE-A- 19 938 591
- DE-U- 8 517 201
- DE-U- 20 000 789
- FR-A- 2 153 610
- FR-A- 2 786 364
- US-A- 2 776 644
- US-A- 3 088 438
- US-A- 5 022 351
- US-A- 5 983 836
- US-A- 6 003 472
- US-B1- 6 240 881

## Beschreibung

Die Erfindung betrifft eine Wickelleine für Tiere bestehend aus einem Gehäuse, in dem die Restlänge einer nach außen geführten Leine aufnehmbar, und durch Betätigungsorgane arretierbar ist.

Wickelleinen für Tiere haben gegenüber herkömmlichen Leinen den Vorteil, daß sie die überschüssige Leine automatisch auf einer mit Federkraft vorgespannten Rolle vorhalten. Solche Wickelleinen sind in der Regel mit einem zum Gehäuse gehörenden Handgriff fester Größe zum Führen des Tieres ausgestattet. Der Vorteil einer solchen kombinierten Bauform besteht in der Möglichkeit eines recht einfachen Herstellungsprozesses. Der erste Nachteil daran ist allerdings, daß unterschiedliche Handgrößen von Führungspersonen nicht in einen Handgriff einer einzigen Größe passen. Daher kann eine optimale Bedien- und Handhabbarkeit nicht gewährleisten werden. Verschlimmert wird dies noch durch den zweiten Nachteil, daß mit der Größe des Tieres die Größe der Wickelleine und damit auch die Größe des Handgriffes zunimmt.

Ist beispielsweise der Handgriff einer Wickelleine daher zu groß, weil eine Führungsperson mit einer zierlichen Hand eine Wickelleine für einen größeres Tier benutzt, wird die Hand der Führungsperson zwangsläufig durch die Zugkraft der Leine und die wirkende Kraftrichtung zum unteren Ende des Handgriffes rutschen. Damit kann der Daumen der führenden Hand allerdings nicht mehr die Bedientasten an oberen Ende des Handgriffes erreichen. In Gefahrensituationen ist somit ein kontrolliertes Führen eines Tieres fast unmöglich.

In einem entgegengesetzten Beispiel ist der Handgriff daher zu klein, weil eine Führungsperson mit einer großen Hand eine Wickelleine für ein kleines Tier benutzt. Der Daumen der führenden Hand kann zwar stets die Bedientasten am oberen Ende des Handgriffes erreichen, da aber nur zwei oder drei Finger in den Handgriff hineinpassen, ist die Führung eines Tieres auf Dauer sehr unbequem.

Da aber feststeht, daß eine und dieselbe Führungsperson nur eine einzige Handgröße besitzt, es sei denn, daß in kalten Jahreszeiten Handschuhe getragen werden und sich dadurch die "Handgröße" verändert, kann in Kombination dieser Nachteile fast nie die optimale Wickelleine benutzt werden.

Ausnahmen hiervon sind erstens Wickelleinen, deren Gehäuse so klein baut, daß es in mittelgroße bis große Handflächen einer Führungsperson passt, und daher keinen eigenen Handgriff besitzt. Eine solche Bauart ist z.B. in der DE 30 40 281 beschriebenen. Diese Wickelleinen haben Bauartbedingt aber nur eine sehr begrenzte Reichweite und keine Möglichkeit, andere feste Halterungen aufzunehmen.

Zweitens sind Wickelleinen bekannt, die zu einem kontrollierten Auslauf eines Tieres gedacht sind, und daher am Gehäuse eine Öse aufweisen, mit der das Gehäuse in einen Haken eingehängt, und somit an einem Gegenstand befestigt werden kann. Nachteilig an diesen Wickelleinen ist, daß die Auszugslänge der Leine nicht einstellbar ist und keine Möglichkeit besteht, andere feste Halterungen aufzunehmen und sie daher nur für dieser Aufgabe genutzt werden können.

Aufgabe der Erfindung ist es somit, eine Wickelleine zu schaffen, bei der diese Nachteile vermieden, und zusätzliche Funktions- und Nutzungsmöglichkeiten geschaffen werden.

Dies wird erfindungsgemäß dadurch erreicht, daß das Gehäuse Mittel zum lösbaren Befestigen und Arretieren eines als Handgriff ausgebildeten Zusatzelementes aufweist.

Ein solches Zusatzelement kann z.B. ein eigenständiger Handgriff in einer bestimmten Größe und/oder Ausführung sein. Somit kann stets, je nach Bedarf und Situation, der optimale Sitz der Führungshand, und damit die komfortable und sichere Bedienung der Wickelleine gewährleisten werden. Mittels eines anderen Zusatzelementes kann das Tier auf einfache Weise an einem anderen Gegenstand wie z.B. einem Geländer beim Einkaufen oder einem Pfosten im Garten befestig werden. Zusatzelemente können in wenigen Sekunden getauscht werden.

Eine Weiterbildung der Erfindung besteht darin, daß die Mittel zum Befestigen von Zusatzelementen als Nut ausgebildet sind. Eine solche Nut gewährleistet eine einfache und sichere Befestigung eines Zusatzelementes.

Es ist zweckmäßig, daß Mittel zum Arretieren bzw. Lösen der Zusatzelemente vorgesehen sind.

Ebenso liegt es im Rahmen der Erfindung, daß die Zusatzelemente Mittel zum lösbaren Befestigen der Wickelleine an einem anderen Gegenstand umfassen.

Es ist zweckmäßig, daß der Handgriff eine Leuchte aufweist.

Zweckmäßig ist weiterhin, daß der Handgriff einen akustischen oder optischen Signalgeber aufweist.

Ebenso ist es zweckmäßig, daß der Handgriff eine Tränengassprühvorrichtung beinhaltet.

Weiterhin ist es ebenfalls zweckmäßig, daß der Handgriff eine Infrarot oder Funksignalübertragungsystem aufweist.

Schließlich ist es auch zweckmäßig, daß der Handgriff Mittel zum Ankoppeln weiterer Wickelleinen aufweist.

Im folgenden wird ein Ausführungsbeispiel der Erfindung anhand von Zeichnungen erläutert.

Es zeigen:
- Fig. 1: ein Wickelleinengehäuse mit erfindungsgemäßer Aufnahme,
- Fig. 1a: ein Wickelleinengehäuse mit alternativer erfindungsgemäßer Aufnahme,
- Fig. 2: ein Wickelleinengehäuse mit mittelgroßem Handgriff
- Fig. 3: ein Wickelleinengehäuse mit großen Handgriff
- Fig. 4: ein Wickelleinengehäuse mit Befestigungsvorrichtung
- Fig. 5: ein Wickelleinengehäuse mit Handriff und integrierter Leuchte
- Fig. 6: ein Handgriff mit einer Aufnahme für zwei Wickelleinen

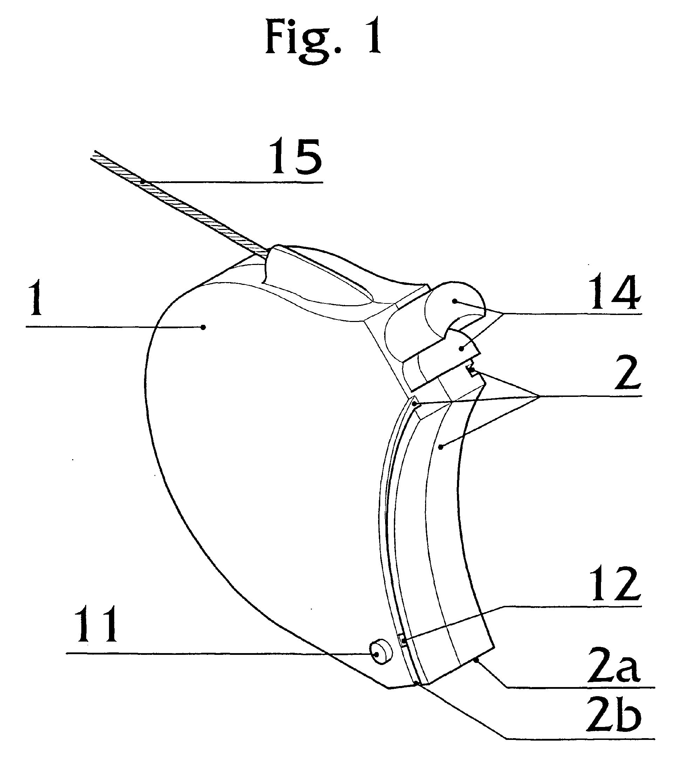

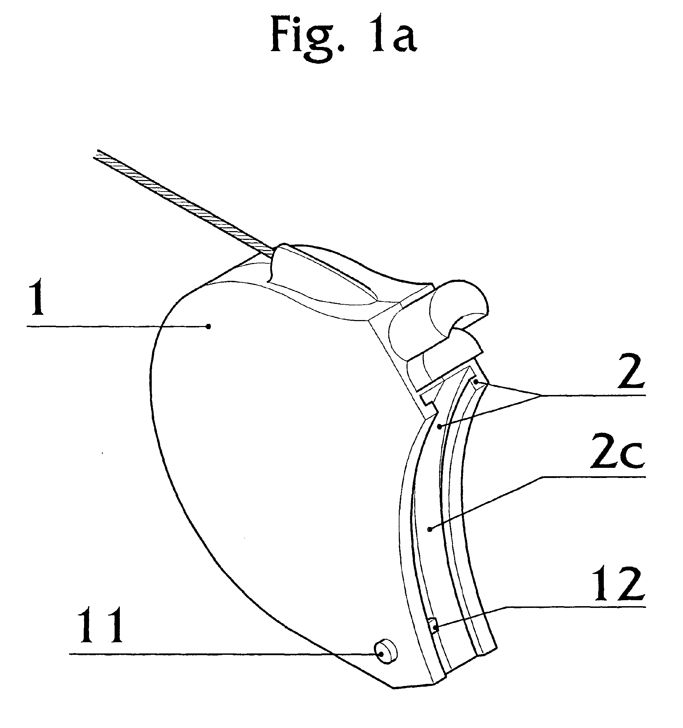

Wie aus der Figur 1 hervorgeht, ist vorzugsweise an der Rückseite des Gehäuses der Wickelleine (1) eine Aufnahme (2) für entsprechende Zusatzelemente (3a, 3b, 5, 6) vorgesehen.

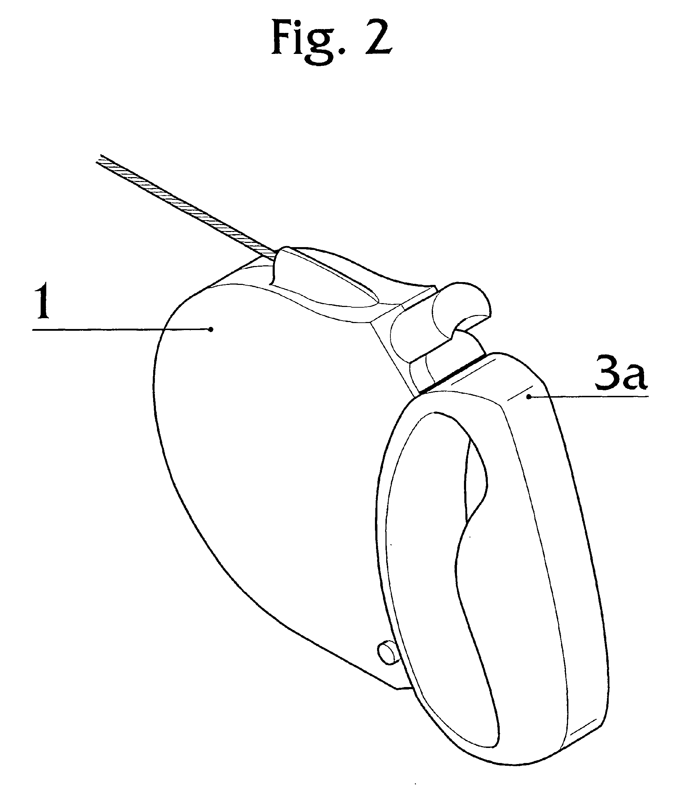

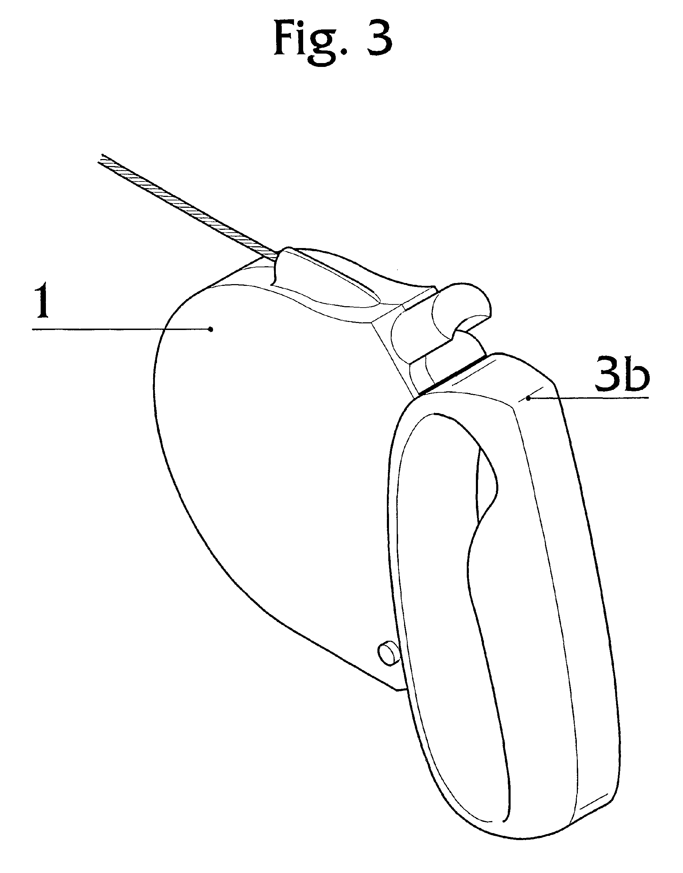

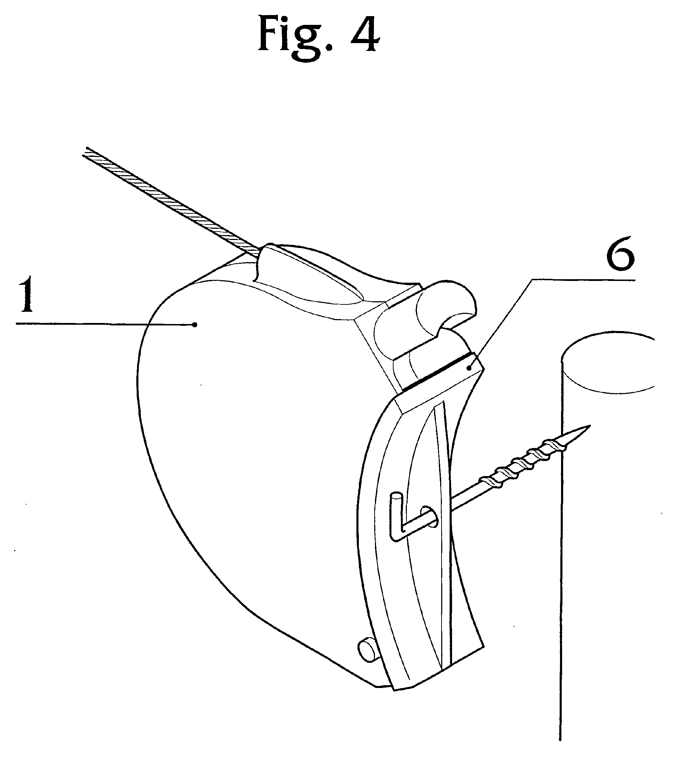

Die Aufnahme (2) ist in Form einer beidseitigen Nut (2a, 2b) mit konstantem Radius ausgeführt. Die Aufnahme (2) kann alternativ dazu auch in Form einer mittigen Nut (2c) mit konstantem Radius ausgeführt sein. Durch den Konstanten Radius wird erreicht, daß eine möglichst große Kontaktfläche zur Übertragung der Zugkräfte zwischen Wickelleinengehäuse (1) und Zusatzelementen wie Handgriff (3a, 3b, 5) oder Befestigungsvorrichtung (6) zur Verfügung steht. In Figur 2 und Figur 3 sind als Zusatzelemente Handgriffe (3a, 3b, 5) unterschiedlicher Größen dargestellt. Figur 4 zeigt als Erweiterung der Wickelleine (1) eine Einrichtung zum temporären Befestigen der Wickelleine (1) an einem Pfosten mittels eines Schraubhakens. Auch sind andere Erweiterungen zur Befestigung der Wickelleine (1) wie z.B. eine Platte mit Drehgelenk zum Anschrauben an eine Wand vorstellbar. Zur Verbindung der Wickelleine (1) mit einem Zusatzelement (3a, 3b, 5, 6) wird diese vorzugsweise von oben in die beidseitigen Nuten (2a, 2b) eingesteckt und soweit nach unten durchgeschoben bis die Arretierung (12) in einer, in den Nuten (2a, 2b) laufenden Flanken des Zusatzelementes (3 a, 3b, 5, 6) einrastet. Zum Lösen der Verbindung zwischen Wickelleine (1) und Zusatzelement (3a, 3b, 5, 6) wird die Entriegelungstaste (11) gedrückt, und das Zusatzelement (3a, 3b, 5, 6) nach oben aus den beidseitigen Nuten (2a, 2b) herausgezogen.

Die erfindungsgemäßen Wickelleine ermöglicht somit einen problemlosen Austausch von unterschiedlichen Zusatzelementen der Wickelleine. So kann die gleiche Wickelleine z.B. sowohl für den kontrollierten Auslauf eines Tieres in einem bestimmten Bereich, als auch Sekunden später für einen Spaziergang mit einer Führungsperson genutzt werden. Ein weiterer Vorteil der erfindungsgemäßen Wickelleine besteht darin, daß im Gegensatz zu herkömmlichen Wickelleinen mit einer Öse zur Befestigung der Leine an einem anderen Gegenstand, die freie Auslauflänge eines Tieres einstellbar ist.

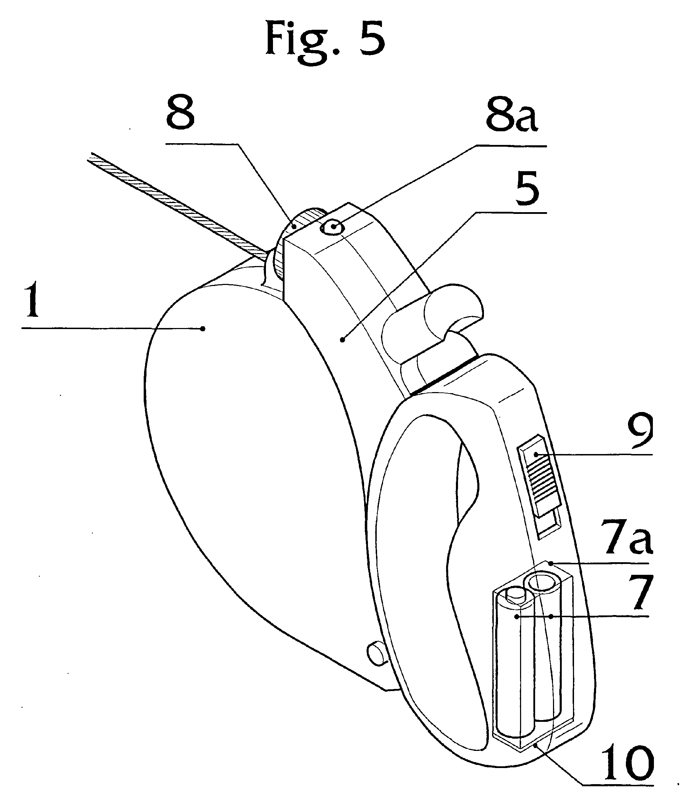

Eine Weiterbildung der erfindungsgemäßen Wickelleine (1) mit ihren Zusatzelementen ist beispielhaft in Figur 5 dargestellt. So kann der anlegbare Handgriff (3a, 3b) z.B. um eine Zusatzleuchte (8) ergänzt sein. In diesem Fall können die notwendigen Batterien (7) zur Stromversorgung der Leuchte (8) durch öffnen der Klappe (10) im unteren Teil des Handgriffs (5) untergebracht werden. Mit dem Daumen der Führungshand kann dann mittels des Schalters (9) die Leuchte (8) ein- bzw. ausgeschaltet werden. Ebenso kann der Handgriff (3a, 3b, 5) durch ein Vorhaltefach für Münzen, z.B. in Form einer Kassette im leeren Batteriefach (7a) (Handgriff 3a, 3b), oder oberhalb der Leuchte (8) (Handgriff 5) in Form eines Schnappfaches wie es im KFZ Zubehörbereich üblich ist, ergänzt sein. Oberhalb der Leuchte (8) im Handgriff (5) kann auch eine Signalleuchte (8a) eingebaut sein, die ebenfalls mittels des Schalters (9) bedienbar ist. Diese dient dann der besseren Erkennung der Führungsperson bei Nacht. Auch ist vorstellbar, daß z.B. eine Tränengaspatrone oder ein akustischer Signalgeber zur Abwehr von aufdringlichen Tieren oder Personen in den Hangriff (3a, 3b, 5) integriert ist. Nicht zuletzt kann die Integration eines Infrarot- oder Funksignalübertragungssystems zur Steuerung eines Empfängers am Tier für Trainingszwecke, oder als Eingangskontrollsystem für Haus und/oder Hof ein sinnvoller Zusatz eines Handgriffes (3a, 3b, 5) sein.

Ein weiterer Vorteil der erfindungsgemäßen Wickelleine (1) mit ihren Zusatzelementen besteht darin, daß bauartbedingt z.B. ein Handgriff(3a, 3b, 5) mit wenigstens einer der oben beschriebenen Zusatzausstattungen auch als eigenständiges System ohne Wickelleine (1) genutzt werden kann. Durch Ausnutzung solcher Synergieeffekte kann der Nutzen des erfindungsgemäßen Gesamtsystems in einem erheblichem Maße gesteigert werden, was letztlich auch zu einem sehr guten Preis-Leistungs-Verhältnis und damit zu einer guten Akzeptanz am Markt führt.

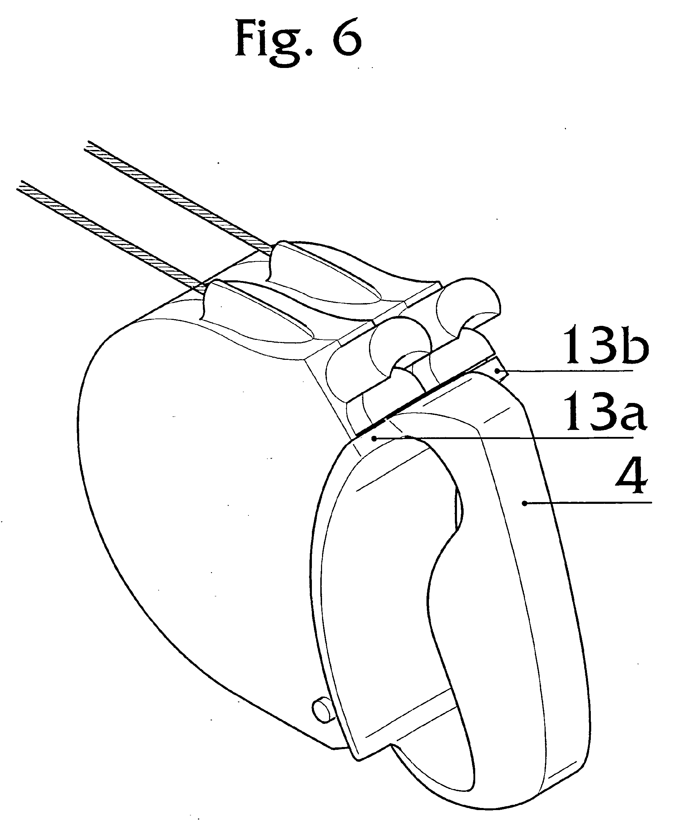

Eine besondere Bauform eines Handgriffs (3a, 3b, 5) ist in Figur 6 dargestellt. Der Handgriff (4) besitzt zwei Aufnahmen (13a, 13b) für je eine Wickelleine (1). Diese besondere Bauform ermöglicht das sichere und ergonomische Führen von zwei Tieren mit nur einer Hand. Da das eigentliche Griffstück des Handgriffes (4) mittig zu den Aufnahmen (13a, 13b) angeordnet ist, kann der Daumen der Führungshand problemlos sowohl die Tasten (14) der linken als auch der rechten Wickelleine (1) betätigen. Dies ist ausgesprochen nützlich wenn z.B. zwei Tiere bei Regen ausgeführt werden. So kann die eine Hand sicher beide Tiere führen, und die Andere gleichzeitig den Regenschirm halten. Auch ein Handgriff (4) kann mit den oben erwähnten Zusatzelementen wie Leuchte, Tränengaspatrone, Signalgeber usw. ausgestattet sein.

## Patentansprüche

1. Wickelleine für Tiere bestehend aus einem Gehäuse (1), in dem die Restlänge einer nach außen geführten Leine (15) aufnehmbar, und durch Betätigungsorgane (14) arretierbar ist, **dadurch gekennzeichnet, daß** das Gehäuse (1) Mittel (2) zum lösbaren Befestigen und Arretieren eines als Handgriff (3a, 3b, 5) ausgebildeten Zusatzelementes aufweist.

2. Wickelleine gemäß Anspruch 1, **dadurch gekennzeichnet, daß** die Mittel (2) zum lösbaren Befestigen und Arretieren eine Einrastverbindung umfassen.

3. Vorrichtung gemäß Anspruch 1, **dadurch gekennzeichnet, daß** die Mittel (2) zum Befestigen von Zusatzelementen als Nut (2a,b) ausgeführt sind.

4. Vorrichtung gemäß Anspruch 1, **dadurch gekennzeichnet, daß** als weiteres Zusatzelement Mittel (6) zum lösbaren Befestigen der Wickelleine (1) an einem anderen Gegenstand vorgesehen sind.

5. Vorrichtung gemäß Anspruch **1, dadurch gekennzeichnet, daß** der Handgriff (3a, 3b) eine Leuchte aufweist.

6. Vorrichtung gemäß Anspruch 1, **dadurch gekennzeichnet, daß** der Handgriff (3a, 3b) einen akustischen oder optischen Signalgeber aufweist.

7. Vorrichtung gemäß Anspruch 1, **dadurch gekennzeichnet, daß** der Handgriff (3a, 3b) eine Tränengassprühvorrichtung aufweist.

8. Vorrichtung gemäß Anspruch 1, **dadurch gekennzeichnet, daß** der Handgriff (3a, 3b) ein Infrarot- oder Funksignalübertragungssystem aufweist.

9. Vorrichtung gemäß Anspruch 1, **dadurch gekennzeichnet, daß** der Handgriff (3a, 3b) Mittel (13a, 13b) zum Ankoppeln weiterer Wickelleinen (1) aufweist.

## Claims

1. Coiling lead for animals consisting of a casing (1) in which the residual length of an externally guided lead (15) can be received and stopped by actuating members (14), **characterised in that** the casing (1) has means (2) for detachable fixing and stopping of an additional element embodied as a handle (3a, 3b, 5).

2. The coiling lead according to claim 1, **characterised in that** the means (2) for detachable fixing and stopping comprise a locating connection.

3. The device according to claim 1, **characterised in that** the means (2) for fixing additional elements are executed as a groove (2a, b).

4. The device according to claim 1, **characterised in that** means (6) for detachably fixing the coiling lead (1) on another object are provided as a further additional element.

5. The device according to claim 1, **characterised in that** the handle (3a, 3b) has a light.

6. The device according to claim 1, **characterised in that** the handle (3a, 3b) has an acoustic or optical signal transmitter.

7. The device according to claim 1, **characterised in that** the handle (3a, 3b) has a tear gas spraying device.

8. The device according to claim 1, **characterised in that** the handle (3a, 3b) has an infrared or radio signal transmission system.

9. The device according to claim 1, **characterised in that** the handle (3a, 3b) has means (13a, 13b) for connecting further coiling leads (1).

## Revendications

1. Laisse à enrouleur pour animaux, composée d'un boîtier (1) pouvant recevoir la longueur résiduelle d'une laisse (15) guidée vers l'extérieur, **caractérisée en ce que** le boîtier (1) présente des moyens (2) permettant de fixer et de bloquer de manière détachable un élément supplémentaire (3a, 3b, 5) faisant office de poignée.

2. Laisse à enrouleur selon la revendication 1, **caractérisée en ce que** les moyens (2) permettant une fixation et un blocage détachable comprennent un raccord à enclenchement.

3. Dispositif selon la revendication 1, **caractérisé en ce que** les moyens (2) permettant une fixation et un blocage détachable se présentent sous la forme d'une rainure (2a,b).

4. Dispositif selon la revendication 1, **caractérisé en ce que** qu'il est prévu comme autre élément supplémentaire des moyens (6) permettant une fixation et un blocage détachable de la laisse à enrouleur (1) à un autre objet.

5. Dispositif selon la revendication 1, **caractérisé en ce que** la poignée (3a, 3b) présente une lampe.

6. Dispositif selon la revendication 1, **caractérisé en ce que** la poignée (3a, 3b) présente un émetteur de signal acoustique ou optique.

7. Dispositif selon la revendication 1, **caractérisé en ce que** la poignée (3a, 3b) présente un dispositif de pulvérisation de gaz lacrymogène.

8. Dispositif selon la revendication 1, **caractérisé en ce que** la poignée (3a, 3b) présente un système de transmission de signaux infrarouges ou radio.

9. Dispositif selon la revendication 1, **caractérisé en ce que** la poignée (3a, 3b) présente des moyens (13a, 13b) de couplage d'autres laisses à enrouleur (1).
